# EUROPEAN PATENT SPECIFICATION

(11) **EP 3 544 102 B1**
(45) Date of publication and mention of the grant of the patent: **16.08.2023**
(21) Application number: 18214300.8
(22) Date of filing: 20.12.2018
(51) Int. Cl.: H01M 8/1004, H01M 8/102, H01M 8/1018, H01M 8/10

(54) **SUPPORT FILM, AFFIXING METHOD, AND METHOD OF AND APPARATUS FOR MANUFACTURING MEMBRANE ELECTRODE ASSEMBLY**
TRÄGERFOLIE, BEFESTIGUNGSVERFAHREN, VERFAHREN UND VORRICHTUNG ZUR HERSTELLUNG EINER MEMBRANELEKTRODENANORDNUNG
FILM DE SUPPORT, PROCÉDÉ DE FIXATION ET PROCÉDÉ ET APPAREIL DE FABRICATION D'ENSEMBLE ÉLECTRODE À MEMBRANE

(30) Priority: 19.03.2018 JP 2018050542
(43) Date of publication of application: 25.09.2019
(73) Proprietor: SCREEN Holdings Co., Ltd., Kyoto 602-8585 (JP)
(72) Inventor: KAWAKAMI, Takuto, Kyoto, 602-8585 (JP)
(74) Representative: Goddar, Heinz J.

(56) References cited:
- WO-A1-2017/171084
- US-A1- 2012 042 902
- US-A1- 2014 338 824
- US-A1- 2017 239 925

## Description

### BACKGROUND OF THE INVENTION

### Field of the Invention

The present invention relates to a laminated assembly, a method of affixing a support film to a hydrocarbon-based polymer electrolyte membrane, and a method of and a system for manufacturing a membrane electrode assembly by forming an electrode layer on a surface of an elongated strip shaped hydrocarbon-based polymer electrolyte membrane.

### Description of the Background Art

In recent years, attention has been given to fuel cells as power sources for driving motor vehicles, mobile phones or the like. A fuel cell is a power generation system that generates electric power through an electrochemical reaction between hydrogen (H₂) contained in a fuel and oxygen (O₂) in the air. The fuel cell has advantages over other cells in its high power generation efficiency and low environmental load.

There are several types of fuel cells that are different depending on electrolytes being used therein. One of these fuel cells is a polymer electrolyte fuel cell (PEFC) including an ion exchange membrane (electrolyte membrane) used as the electrolyte. Polymer electrolyte fuel cells are capable of operating at room temperature and can be reduced in size and weight. For this reason, the application of the polymer electrolyte fuel cells to motor vehicles or portable devices has been expected.

In general, the polymer electrolyte fuel cells have a structure such that multiple cells are stacked one on top of another. One cell is comprised of a membrane electrode assembly (MEA) and a pair of separators provided on opposite sides of the membrane electrode assembly to sandwich the membrane electrode assembly therebetween. The membrane electrode assembly includes an electrolyte membrane and a pair of electrode layers formed on opposite surfaces of the electrolyte membrane. One of the two electrode layers is an anode electrode, and the other thereof is a cathode electrode. When a fuel gas containing hydrogen comes in contact with the anode electrode and air comes in contact with the cathode electrode, electric power is generated through an electrochemical reaction.

The aforementioned membrane electrode assembly is typically produced by applying a catalyst ink (electrode paste) to a surface of an electrolyte membrane and then drying the catalyst ink. The catalyst ink is obtained by dispersing catalyst particles containing platinum (Pt) in a solvent such as alcohol. A conventional technique of manufacturing such a membrane electrode assembly is disclosed, for example, in Japanese Patent Application Laid-Open No. 2017-142897.

In a manufacturing apparatus disclosed in Japanese Patent Application Laid-Open No. 2017-142897, a back sheet is separated from an electrolyte membrane to which the back sheet has been affixed, and thereafter the electrolyte membrane is held on an outer peripheral surface of a suction roller, with a porous substrate therebetween. Then, while the porous substrate and the electrolyte membrane are transported by rotating the suction roller, a catalyst ink is ejected from a nozzle. Thus, the catalyst ink is applied onto a surface of the electrolyte membrane to form an electrode layer. Thereafter, a support film is affixed to the surface of the electrolyte membrane, and the resultant laminate is collected.

In this manufacturing apparatus, what is called a fluorine-based polymer electrolyte membrane such as a polymer electrolyte containing perfluorocarbon sulfonic acid, for example, is used as the electrolyte membrane. Also, a film made of PEN (polyethylene naphthalate) or PET (polyethylene terephthalate), for example, is used as the support film. Such a fluorine-based electrolyte membrane itself has tackiness (stickiness). Thus, when subjected to a thermal laminating process, the electrolyte membrane of this type is affixable to the support film made of PEN, PET or the like which is less sticky.

A hydrocarbon-based polymer electrolyte membrane may be used as the electrolyte membrane. It is difficult to affix the hydrocarbon-based polymer electrolyte membrane to the support film made of PEN, PET or the like because the hydrocarbon-based polymer electrolyte membrane itself is less sticky.

US 2014/338824 A1 discloses adhering an electrolytes film to a support film.

US 2017/239925 A1 discloses a method for fluorine and hydrocarbon based polymer electrolytes applying a support film without sticky surface.

### SUMMARY OF THE INVENTION

In view of the foregoing, it is therefore an object of the present invention to provide a technique capable of affixing a support film to a hydrocarbon-based polymer electrolyte membrane in the process of manufacturing a membrane electrode assembly.

To solve the aforementioned problem, the present invention provides a laminated assembly according to claim 1.

Furthermore, the present invention provides a method according to claim 5 and a method according to claim 7.

In addition the present invention provides a system according to claim 8.

According to the present invention, a film including a surface having sticking power is used as the support film for the hydrocarbon-based polymer electrolyte membrane. The hydrocarbon-based polymer electrolyte membrane is less sticky than conventional fluorine-based polymer electrolyte membranes. For this reason, if a thermal laminating process is performed directly on a PET film or a PEN film conventionally used as the support film, the electrolyte membrane and the support film are not affixed to each other. As a result, the support film fails to appropriately support the electrolyte membrane. The use of the film including the surface having the sticking power as the support film enables the support film to be affixed to the polymer electrolyte membrane, thereby appropriately supporting the electrolyte membrane.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a diagrammatic view showing a configuration of a membrane electrode assembly manufacturing apparatus;
Fig. 2 is an enlarged view of a lower portion of a suction roller and its surroundings;
Fig. 3 is a block diagram showing connections between a controller and parts of the manufacturing apparatus;
Fig. 4 shows a sticking state and a transfer state for each value of sticking power of a support film;
Fig. 5 shows the sticking state and the transfer state for each value of pressing force in an affixation part; and
Fig. 6 shows the sticking state and the transfer state for each value of surface temperature of a laminating roller.

### DESCRIPTION OF THE PREFERRED EMBODIMENTS

A preferred embodiment according to the present invention will now be described with reference to the drawings.

### <1. Configuration of Membrane Electrode Assembly Manufacturing Apparatus>

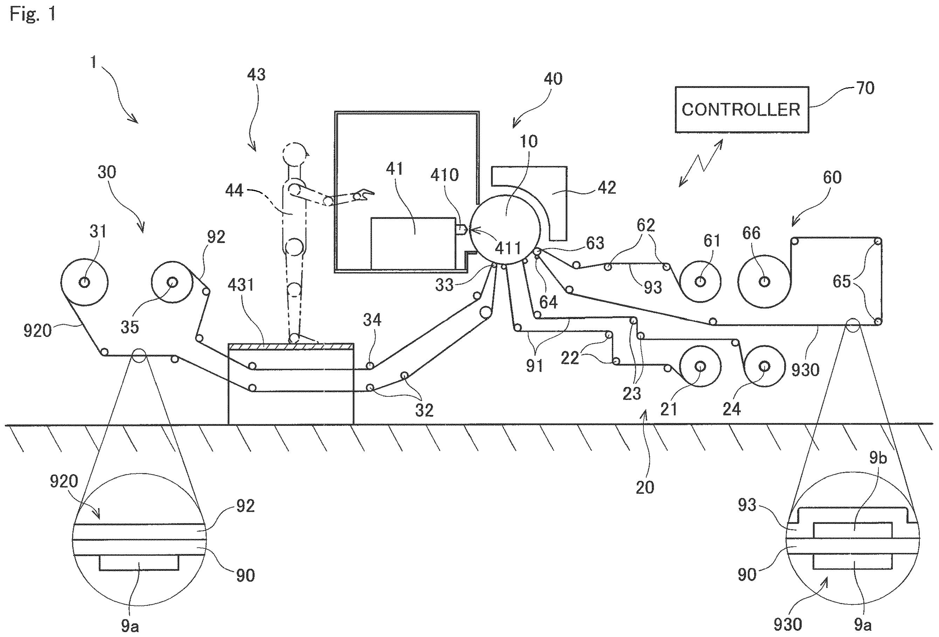

Fig. 1 is a diagrammatic view showing a configuration of a membrane electrode assembly manufacturing apparatus 1 according to one preferred embodiment of the present invention. This manufacturing apparatus 1 is an apparatus that forms an electrode layer on a surface of an electrolyte membrane 90 which is an elongated strip-shaped thin membrane while transporting the electrolyte membrane 90 to manufacture a membrane electrode assembly for a polymer electrolyte fuel cell. As shown in Fig. 1, the membrane electrode assembly manufacturing apparatus 1 according to the present preferred embodiment includes a suction roller 10, a porous base material supply and collection part 20, an electrolyte membrane supply part 30, an electrode layer formation part 40, an assembly collection part 60 having an affixation part 50, and a controller 70.

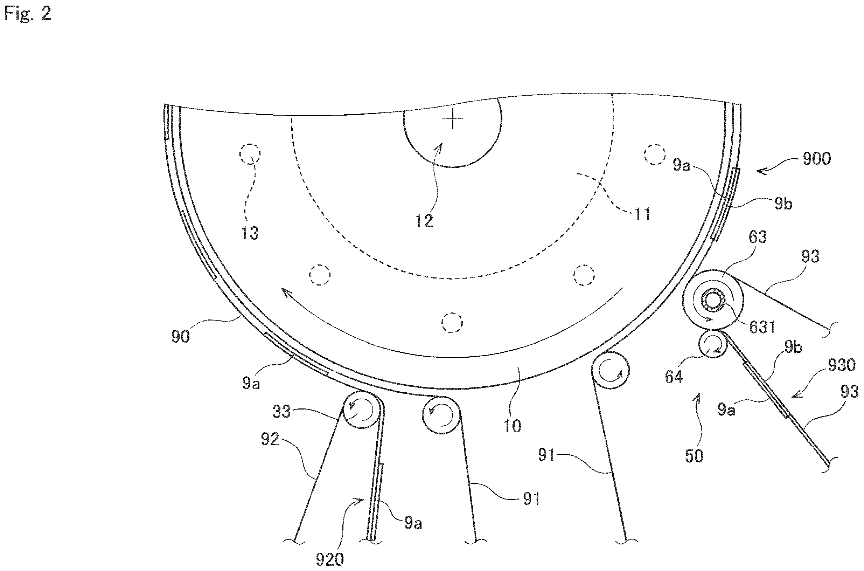

The suction roller 10 is a roller that rotates while holding a porous base material 91 and the electrolyte membrane 90 under suction on part of an outer peripheral surface thereof. The suction roller 10 has a cylindrical outer peripheral surface with a plurality of suction holes. The suction roller 10 has a diameter in the range of 200 to 1600 mm, for example. Fig. 2 is an enlarged view of a lower portion of the suction roller 10 and its surroundings. As indicated by a broken line in Fig. 2, a rotary driver 11 having a driving source such as a motor is connected to the suction roller 10. When the rotary driver 11 is put into operation, the suction roller 10 rotates about a horizontally extending rotation axis.

Examples of the material of the suction roller 10 used herein include porous materials such as porous carbon and porous ceramics. Specific examples of the porous ceramics include sintered bodies of alumina (Al₂O₃) and silicon carbide (SiC). The porous suction roller 10 has pores with a diameter of not greater than 5 µm, for example, and a porosity in the range of 15% to 50%, for example.

Metal such as stainless steel and iron may be used in place of the porous materials as the material of the suction roller 10. When metal is used as the material of the suction roller 10, minute pores which connect the interior of the suction roller 10 and the suction holes in the outer peripheral surface are formed by machining. Preferably, the suction holes in the outer peripheral surface of the suction roller 10 have a diameter of not greater than 2 mm for the purpose of preventing the occurrence of suction marks.

The suction roller 10 has an end surface provided with a sucking port 12. The sucking port 12 is connected to a sucking mechanism not shown. For example, an exhaust pump is used as the sucking mechanism. When the sucking mechanism is put into operation, gas in the suction roller 10 is sucked through the sucking port 12, so that a negative pressure (vacuum) is developed inside the suction roller 10. A negative pressure is developed also in the suction holes provided in the outer peripheral surface of the suction roller 10 through the pores. The porous base material 91 and the electrolyte membrane 90 are transported in the form of an arc by the rotation of the suction roller 10 while being held on the outer peripheral surface of the suction roller 10 under suction by the negative pressure.

Multiple water-cooling tubes 13 are provided inside the suction roller 10, as indicated by broken lines in Fig. 2. Cooling water temperature-controlled at a predetermined temperature is supplied from a water supply mechanism not shown to the water-cooling tubes 13. When the manufacturing apparatus 1 is in operation, the heat of the suction roller 10 is absorbed by the cooling water serving as a heat medium. Thus, the suction roller 10 is cooled. After absorbing the heat, the cooling water is discharged to a drainage mechanism not shown.

A heating mechanism such as a hot-water circulation mechanism and a heater may be provided in place of a drying furnace 42 to be described later inside the suction roller 10. In that case, the temperature of the outer peripheral surface of the suction roller 10 may be controlled by controlling the heating mechanism provided inside the suction roller 10 without the provision of the water-cooling tubes inside the suction roller 10.

The porous base material supply and collection part 20 supplies the elongated strip-shaped porous base material 91 toward the suction roller 10 and collects the porous base material 91 after use. The porous base material 91 is a base material having a large number of minute pores to allow air to pass therethrough. Preferably, the porous base material 91 is made of a material less prone to produce dust particles. As shown in Fig. 1, the porous base material supply and collection part 20 includes a porous base material supply roller 21, a plurality of porous base material carrying-in rollers 22, a plurality of porous base material carrying-out rollers 23, and a porous base material collection roller 24. The porous base material supply roller 21, the porous base material carrying-in rollers 22, the porous base material carrying-out rollers 23, and the porous base material collection roller 24 are disposed parallel to the suction roller 10. The porous base material carrying-in rollers 22 constitute a carrying-in path for the porous base material 91. The porous base material carrying-out rollers 23 constitute a carrying-out path for the porous base material 91.

Before being supplied, the porous base material 91 is wound on the porous base material supply roller 21. The porous base material supply roller 21 is rotated by the power of a motor not shown. The porous base material supply roller 21 rotates, whereby the porous base material 91 is unwound from the porous base material supply roller 21. The unwound porous base material 91 is guided by the porous base material carrying-in rollers 22, and is transported along the carrying-in path to the outer peripheral surface of the suction roller 10. Then, the porous base material 91 is transported in the form of an arc by the rotation of the suction roller 10 while being held on the outer peripheral surface of the suction roller 10 under suction. The suction roller 10 and the porous base material 91 held on the suction roller 10 are shown in Fig. 2 as spaced apart from each other for ease of understanding.

The porous base material 91 is transported through an angle of not less than 180°, preferably not less than 270°, about the axis of the suction roller 10. Thereafter, the porous base material 91 is moved away from the outer peripheral surface of the suction roller 10. The porous base material 91 moved away from the suction roller 10 is guided by the porous base material carrying-out rollers 23, and is transported along the carrying-out path to the porous base material collection roller 24. The porous base material collection roller 24 is rotated by the power of a motor not shown. Thus, the porous base material 91 after use is wound on the porous base material collection roller 24.

The electrolyte membrane supply part 30 is a section for supplying a laminated base material 920 to around the suction roller 10 and for separating a back sheet 92 from the electrolyte membrane 90. The laminated base material 920 is comprised of two layers: the electrolyte membrane 90 and the back sheet 92.

The electrolyte membrane 90 is a hydrocarbon-based polymer electrolyte membrane. The hydrocarbon-based polymer electrolyte membrane is made of a polymer electrolyte material comprised of a hydrocarbon-based polymer having an ionizable group. The electrolyte membrane 90 has a thickness in the range of 5 to 30 µm, for example. The electrolyte membrane 90 swells when exposed to moisture in the atmosphere, and shrinks when the humidity of the atmosphere is decreased. That is, the electrolyte membrane 90 has the property of being easily deformable depending on the humidity of the atmosphere.

The back sheet 92 is a film for suppressing the deformation of the electrolyte membrane 90. Resins having a mechanical strength higher than that of the electrolyte membrane 90 and excellent in shape retaining function are used as the material of the back sheet 92. For example, a film made of PEN (polyethylene naphthalate), PET (polyethylene terephthalate) or the like is used as the back sheet 92. The back sheet 92 has a thickness in the range of 25 to 100 µm, for example. A film similar to a support film 93 to be described later may be used as the back sheet 92.

As shown in Fig. 1, the electrolyte membrane supply part 30 includes a laminated base material supply roller 31 (electrolyte membrane supply roller), a plurality of laminated base material carrying-in rollers 32, a separation roller 33, a plurality of back sheet carrying-out rollers 34, and a back sheet collection roller 35. The laminated base material supply roller 31, the laminated base material carrying-in rollers 32, the separation roller 33, the back sheet carrying-out rollers 34, and the back sheet collection roller 35 are disposed parallel to the suction roller 10.

Before being supplied, the laminated base material 920, with the back sheet 92 positioned inside, is wound on the laminated base material supply roller 31. One surface of the electrolyte membrane 90 which is opposite the back sheet 92 is referred to hereinafter as a "first surface", and the other surface of the electrolyte membrane 90 which is opposite the first surface is referred to hereinafter as a "second surface". In the present preferred embodiment, an electrode layer is previously formed on the first surface of the electrolyte membrane 90. This electrode layer formed on the first surface of the electrolyte membrane 90 is referred to hereinafter as a "first electrode layer 9a". The first electrode layer 9a is formed in an apparatus different from the manufacturing apparatus 1 by intermittently applying an electrode material to the first surface of the electrolyte membrane 90 while transporting the laminated base material 920 comprised of the two layers, i.e. the back sheet 92 and the electrolyte membrane 90, by a roll-to-roll process and then drying the applied electrode material.

The laminated base material supply roller 31 functions as the electrolyte membrane supply roller for unwinding the electrolyte membrane 90 toward a surface of the porous base material 91 held on the outer peripheral surface of the suction roller 10. The laminated base material supply roller 31 is rotated by the power of a motor not shown. As the laminated base material supply roller 31 rotates, the laminated base material 920 is unwound from the laminated base material supply roller 31. The unwound laminated base material 920 is guided by the laminated base material carrying-in rollers 32, and is transported along a carrying-in path to the separation roller 33.

The separation roller 33 is a roller for separating the back sheet 92 from the electrolyte membrane 90. The separation roller 33 has a cylindrical outer peripheral surface with a diameter smaller than that of the suction roller 10. At least the outer peripheral surface of the separation roller 33 is made of an elastic body. The separation roller 33 is disposed adjacent to the suction roller 10 and slightly downstream from the position where the porous base material 91 is introduced onto the suction roller 10 as seen in the direction of rotation of the suction roller 10. The separation roller 33 is pressurized toward the suction roller 10 by an air cylinder not shown.

As shown in Fig. 2, the laminated base material 920 transported by the laminated base material carrying-in rollers 32 is introduced to between the suction roller 10 and the separation roller 33. At this time, the first surface of the electrolyte membrane 90 together with the first electrode layer 9a comes in contact with the surface of the porous base material 91 held on the suction roller 10, and the back sheet 92 comes in contact with the outer peripheral surface of the separation roller 33. The laminated base material 920 is pressed toward the suction roller 10 by the pressure received from the separation roller 33.

A sucking force from the suction roller 10 develops a negative pressure on the surface of the porous base material 91 held on the suction roller 10. The electrolyte membrane 90 is suctioned onto the surface of the porous base material 91 by the negative pressure. On the other hand, the back sheet 92 having passed between the suction roller 10 and the separation roller 33 is transported away from the suction roller 10 toward the back sheet carrying-out rollers 34. Thus, the back sheet 92 is separated from the electrolyte membrane 90. As a result, the second surface of the electrolyte membrane 90 is exposed.

The electrolyte membrane 90 together with the porous base material 91 is transported in the form of an arc by the rotation of the suction roller 10 while being held on the suction roller 10. The porous base material 91 and the electrolyte membrane 90 held on the suction roller 10 are shown in Fig. 2 as spaced apart from each other for ease of understanding.

The separated back sheet 92 is transported along a predetermined carrying-out path to the back sheet collection roller 35 while being guided by the back sheet carrying-out rollers 34. The back sheet collection roller 35 is rotated by the power of a motor not shown. Thus, the back sheet 92 is wound on the back sheet collection roller 35.

In the present preferred embodiment, the porous base material 91 is interposed between the outer peripheral surface of the suction roller 10 and the electrolyte membrane 90 in this manner. Thus, there is no direct contact between the outer peripheral surface of the suction roller 10 and the first electrode layer 9a formed on the first surface of the electrolyte membrane 90. This prevents part of the first electrode layer 9a from adhering to the outer peripheral surface of the suction roller 10, and prevents foreign materials adhering to the outer peripheral surface of the suction roller 10 from being transferred to the electrolyte membrane 90.

The electrode layer formation part 40 includes an application part 41 having a nozzle 410, and the drying furnace 42, as shown in Fig. 1. The application part 41 is a mechanism for applying an electrode material onto a surface (the second surface) of the electrolyte membrane 90 around the suction roller 10. A catalyst ink obtained by dispersing catalyst particles containing platinum (Pt) in a solvent such as alcohol, for example, is used as the electrode material. The nozzle 410 is provided downstream from the separation roller 33 as seen in a direction (oritransport direction) in which the electrolyte membrane 90 is transported by the suction roller 10. The nozzle 410 has an ejection orifice 411 opposed to the outer peripheral surface of the suction roller 10. The ejection orifice 411 is a slit-shaped opening extending horizontally along the outer peripheral surface of the suction roller 10.

The nozzle 410 is connected to an electrode material supply source not shown. When the application part 41 is driven, the electrode material is supplied from the electrode material supply source through piping to the nozzle 410. Then, the electrode material is ejected from the ejection orifice 411 of the nozzle 410 toward the second surface of the electrolyte membrane 90. Thus, the electrode material is applied to the second surface of the electrolyte membrane 90.

In the present preferred embodiment, the electrode material is intermittently ejected from the ejection orifice 411 of the nozzle 410 by opening and closing a valve interposed in the piping between the electrode material supply source and the nozzle 410 at fixed time intervals. This causes the electrode material to be intermittently applied to the second surface of the electrolyte membrane 90 at fixedly spaced intervals in the transport direction. Alternatively, the electrode material may be applied to the second surface of the electrolyte membrane 90 continuously in the transport direction by continuously opening the valve.

A material that causes a fuel cell reaction to occur in the anode or cathode of a polymer fuel cell is used for the catalyst particles in the electrode material. Specifically, particles of platinum (Pt), a platinum alloy, a platinum compound and the like may be used as the catalyst particles. Examples of the platinum alloy used herein include alloys of platinum and at least one metal selected from the group consisting of ruthenium (Ru), palladium (Pd), nickel (Ni), molybdenum (Mo), iridium (Ir), iron (Fe) and the like. In general, platinum is used as the electrode material for the cathode, and the platinum alloy is used as the electrode material for the anode. The electrode material ejected from the nozzle 410 may be for the cathode or for the anode. It should be noted that electrode materials of polarities opposite from each other are used for the electrode layers 9a and 9b formed on the front and back surfaces of the electrolyte membrane 90.

The nozzle 410 and piping in the application part 41 require maintenance such as cleaning in a disassembled state at regular time intervals. To this end, the manufacturing apparatus 1 includes a maintenance space 43 for the maintenance of the application part 41. In the present preferred embodiment, the maintenance space 43 is disposed between the application part 41 and the back sheet collection roller 35. For the maintenance of the application part 41, an operator 44 stands on a platform 431 provided in the maintenance space 43 to clean the parts constituting the application part 41.

The drying furnace 42 dries the electrode material applied to the second surface of the electrolyte membrane 90. The drying furnace 42 according to the present preferred embodiment is disposed downstream from the application part 41 as seen in the direction in which the electrolyte membrane 90 is transported by the suction roller 10. The drying furnace 42 is provided in the form of an arc along the outer peripheral surface of the suction roller 10. The drying furnace 42 blows heated gases (hot gases) toward the second surface of the electrolyte membrane 90 around the suction roller 10. Thus, the electrode material applied to the second surface of the electrolyte membrane 90 is heated, so that the solvent in the electrode material is evaporated. This dries the electrode material to form an electrode layer on the second surface of the electrolyte membrane 90. This electrode layer formed on the second surface of the electrolyte membrane 90 is referred to hereinafter as a "second electrode layer 9b". The aforementioned steps provide a membrane electrode assembly 900 comprised of the electrolyte membrane 90, the first electrode layer 9a, and the second electrode layer 9b.

The assembly collection part 60 affixes the support film 93 to the membrane electrode assembly 900 to collect a laminated assembly 930 including the membrane electrode assembly 900. The assembly collection part 60 includes the affixation part 50. The affixation part 50 affixes the electrolyte membrane 90 separated from the surface of the porous base material 91 and the support film 93 together. That is, the affixation part 50 affixes the membrane electrode assembly 900 and the support film 93 together to form the laminated assembly 930.

As shown in Fig. 1, the assembly collection part 60 includes a support film supply roller 61, a plurality of support film carrying-in rollers 62, a laminating roller 63, a pressure roller 64, a plurality of assembly carrying-out rollers 65, and an assembly collection roller 66 (electrolyte membrane collection roller). The support film supply roller 61, the support film carrying-in rollers 62, the laminating roller 63, the pressure roller 64, the assembly carrying-out rollers 65, and the assembly collection roller 66 are disposed parallel to the suction roller 10.

Before being supplied, the support film 93 is wound on the support film supply roller 61. The support film supply roller 61 is rotated by the power of a motor not shown. As the support film supply roller 61 rotates, the support film 93 is unwound from the support film supply roller 61. The unwound support film 93 is transported along a predetermined carrying-in path to the laminating roller 63 while being guided by the support film carrying-in rollers 62.

Resins having a mechanical strength higher than that of the electrolyte membrane 90 and excellent in shape retaining function are used as the material of the support film 93. The details on the support film 93 will be described later.

The laminating roller 63 is a roller for affixing the support film 93 to the membrane electrode assembly 900. An example of the material of the laminating roller 63 used herein includes rubber having high heat resistance. The laminating roller 63 has a cylindrical outer peripheral surface smaller in diameter than the suction roller 10. The laminating roller 63 is disposed adjacent to the suction roller 10 and at a position downstream from the drying furnace 42 and upstream from the position where the porous base material 91 is separated from the suction roller 10 as seen in the direction of rotation of the suction roller 10. The laminating roller 63 is pressurized toward the suction roller 10 by an air cylinder not shown.

As shown in Fig. 2, a heater 631 is provided inside the laminating roller 63 in the present preferred embodiment. The heater 631 generates heat when electrically energized. A sheathed heater, for example, is used as the heater 631. When the heater 631 is energized, the outer peripheral surface of the laminating roller 63 is temperature-controlled at a predetermined temperature higher than the environmental temperature by the heat generated from the heater 631. An output from the heater 631 may be controlled so that the temperature of the outer peripheral surface of the laminating roller 63 measured using a temperature sensor such as a radiation thermometer reaches a fixed temperature based on the result of measurement. It should be noted that the laminating roller 63 need not have a heating mechanism such as the heater 631.

As shown in Fig. 2, the support film 93 transported by the support film carrying-in rollers 62 is introduced to between the membrane electrode assembly 900 transported around the suction roller 10 and the laminating roller 63. At this time, the support film 93 is pressed against the membrane electrode assembly 900 by the pressure received from the laminating roller 63, and is heated by the heat of the laminating roller 63. As a result, the support film 93 is affixed to the second surface of the electrolyte membrane 90 constituting the membrane electrode assembly 900. That is, the second electrode layer 9b formed on the second surface of the electrolyte membrane 90 is sandwiched between the electrolyte membrane 90 and the support film 93. The aforementioned steps form the laminated assembly 930 including the membrane electrode assembly 900 and the support film 93 which are laminated together.

The laminated assembly 930 having passed between the suction roller 10 and the laminating roller 63 is transported away from the suction roller 10. Thus, the membrane electrode assembly 900 is separated from the porous base material 91.

In the present preferred embodiment, the pressure roller 64 is disposed near the laminating roller 63, as shown in Fig. 2. The pressure roller 64 is disposed adjacent to the laminating roller 63 and downstream from a gap between the suction roller 10 and the laminating roller 63 as seen in the transport direction of the membrane electrode assembly 900. The pressure roller 64 is pressurized toward the laminating roller 63 by an air cylinder not shown. The laminated assembly 930 separated from the porous base material 91 subsequently passes between the laminating roller 63 and the pressure roller 64. This improves the adherence of the support film 93 to the second surface of the membrane electrode assembly 900.

In this manner, the membrane electrode assembly 900 and the support film 93 are pressed by the suction roller 10 and the laminating roller 63, and are thereafter pressed by the laminating roller 63 and the pressure roller 64. The membrane electrode assembly 900 and the support film 93, which are pressed at two locations arranged in the transport direction in this manner, are improved in adherence therebetween to thereby be affixed to each other. In other words, the location at which the suction roller 10 is opposed to the laminating roller 63, the laminating roller 63, and the pressure roller 64 constitute the affixation part 50 for affixing the membrane electrode assembly 900 and the support film 93 together. In the affixation part 50, the support film 93 is affixed to the electrolyte membrane 90 by bringing the surface of the electrolyte membrane 90 on which the second electrode layer 9b is formed and the surface of the support film 93 which has sticking power into contact with each other.

If the pressing by means of the suction roller 10 and the laminating roller 63 sufficiently improves the adherence, the pressure roller 64 may be dispensed with. In that case, the location at which the suction roller 10 is opposed to the laminating roller 63 and the laminating roller 63 constitute the affixation part 50 for affixing the membrane electrode assembly 900 and the support film 93 together.

Thereafter, the laminated assembly 930 is transported along a predetermined carrying-out path to the assembly collection roller 66 while being guided by the assembly carrying-out rollers 65. The assembly collection roller 66 is rotated by the power of a motor not shown. Thus, the laminated assembly 930 is wound on the assembly collection roller 66, with the support film 93 positioned outside.

In this manner, the steps of unwinding the laminated base material 920 from the laminated base material supply roller 31, separating the back sheet 92 from the electrolyte membrane 90, applying the electrode material to the electrolyte membrane 90, drying the electrode material, affixing the support film 93 to the electrolyte membrane 90, and winding the laminated assembly 930 including the membrane electrode assembly 900 on the assembly collection roller 66 are performed sequentially in the manufacturing apparatus 1 according to the present preferred embodiment. This achieves the manufacture of the membrane electrode assembly 900 used for the electrodes of the polymer electrolyte fuel cell. The electrolyte membrane 90 is always held by any one of the back sheet 92, the suction roller 10, and the support film 93. This suppresses the deformation, such as swelling and shrinking, of the electrolyte membrane 90 in the manufacturing apparatus 1.

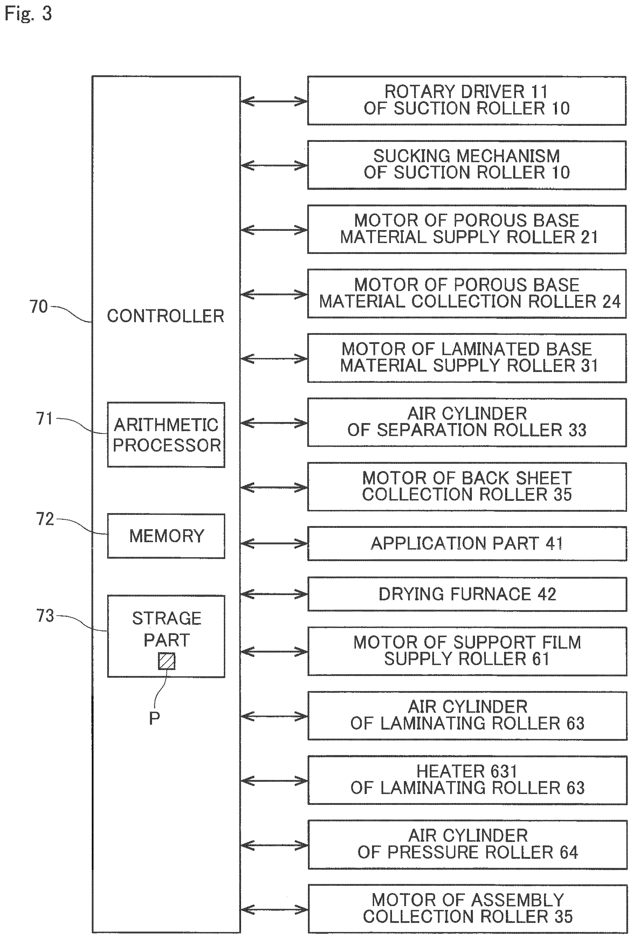

The controller 70 is a section for controlling the operations of the components in the manufacturing apparatus 1. Fig. 3 is a block diagram showing connections between the controller 70 and the components in the manufacturing apparatus 1. As conceptually shown in Fig. 3, the controller 70 is formed by a computer including an arithmetic processor 71 such as a CPU, a memory 72 such as a RAM, and a storage part 73 such as a hard disk drive. A computer program P for executing the process of manufacturing the membrane electrode assembly is installed in the storage part 73.

As shown in Fig. 3, the controller 70 is connected to the rotary driver 11 of the suction roller 10, the sucking mechanism of the suction roller 10, the motor of the porous base material supply roller 21, the motor of the porous base material collection roller 24, the motor of the laminated base material supply roller 31, the air cylinder of the separation roller 33, the motor of the back sheet collection roller 35, the application part 41, the drying furnace 42, the motor of the support film supply roller 61, the air cylinder of the laminating roller 63, the heater 631 of the laminating roller 63, the air cylinder of the pressure roller 64, and the motor of the assembly collection roller 66 for communication therewith.

The controller 70 temporarily reads the computer program P and data that are stored in the storage part 73 onto the memory 72, and the arithmetic processor 71 performs arithmetic processing based on the computer program P, so that the controller 70 controls the operations of the aforementioned components. Thus, the process of manufacturing the membrane electrode assembly 900 in the manufacturing apparatus 1 proceeds.

### <2. Support Film>

Next, the support film 93 in the aforementioned manufacturing apparatus 1 will be described.

As mentioned above, the hydrocarbon-based polymer electrolyte membrane is used as the electrolyte membrane 90. The hydrocarbon-based polymer electrolyte membrane is less sticky than conventional fluorine-based polymer electrolyte membranes. For this reason, if subjected to a thermal laminating process, a PET film or a PEN film conventionally used as the support film is not sufficiently affixed to the electrolyte membrane 90 to fail to appropriately support the electrolyte membrane 90.

A solution to such a problem is the use of a film including at least one surface having sticking power as the support film 93. This enables the support film 93 to be affixed to the electrolyte membrane 90 that is a hydrocarbon-based polymer electrolyte membrane, thereby appropriately supporting the electrolyte membrane 90.

The support film 93 includes a base material layer and a sticky layer covering a surface of the base material layer, for example. The sticky layer is made of a sticky material covering the surface of the base material layer, for example. Examples of the material of the base material layer of the support film 93 used herein include polyolefins such as polyethylene and polypropylene, polyesters such as PET and PEN, polyvinyl chloride, and polyurethane.

As the sticking power of the surface of the support film 93 increases, the electrolyte membrane 90 and the support film 93 stick to each other more easily. On the other hand, as the sticking power of the surface of the support film 93 increases, the transfer of the second electrode layer 9b is more prone to occur. It is hence desirable that the sticking power of the surface of the support film 93 is in an appropriate range.

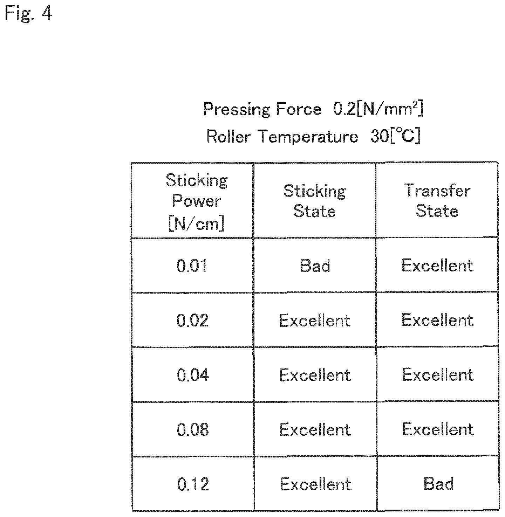

As shown in Figs. 4 to 6, experiments are conducted on the state of sticking between the membrane electrode assembly 900 and the support film 93 and the state of transfer of the second electrode layer 9b under varied conditions. Fig. 4 shows the sticking state and the transfer state for each value of the sticking power of the support film 93 in the case where a pressing force is 0.2 N/mm² during affixation and a surface temperature of the laminating roller 63 is 30°C. The term "pressing force during affixation" refers to a pressing force between the laminating roller 63 and the suction roller 10 or a pressing force between the laminating roller 63 and the pressure roller 64, whichever is greater. The unit [N/cm] used herein indicates values measured pursuant to JIS (Japanese Industrial Standards) A 0237.

In the "Sticking State" column in Figs. 4 to 6, "Excellent" indicates an excellent sticking state, and "Bad" indicates a bad sticking state. In the "Transfer State" column in Figs. 4 to 6, "Excellent" indicates a very excellent state in which the electrode layer is not at all transferred (no transfer locations are visually identified); "Good" indicates a good state in which the electrode layer is slightly transferred (a few transfer locations are visually identified); and "Bad" indicates a bad state in which the electrode layer is transferred.

As shown in Fig. 4, the sticking state is excellent and the transfer state is excellent when the sticking power of the surface of the support film 93 is in the range of 0.02 to 0.08 N/cm. It is hence preferable that the sticking power of the surface of the support film 93 is in the range of 0.02 to 0.08 N/cm. In other words, when the sticking power is in the aforementioned range, the support film 93 sticks to the electrolyte membrane 90 to appropriately support the electrolyte membrane 90, and the transfer of the second electrode layer 9b is less liable to occur.

As the pressing force acting on the electrolyte membrane 90 and the support film 93 in the affixation part 50 increases, the electrolyte membrane 90 and the support film 93 stick to each other more easily, but the transfer of the second electrode layer 9b is more prone to occur. It is hence desirable that the pressing force in the affixation part 50 is in an appropriate range.

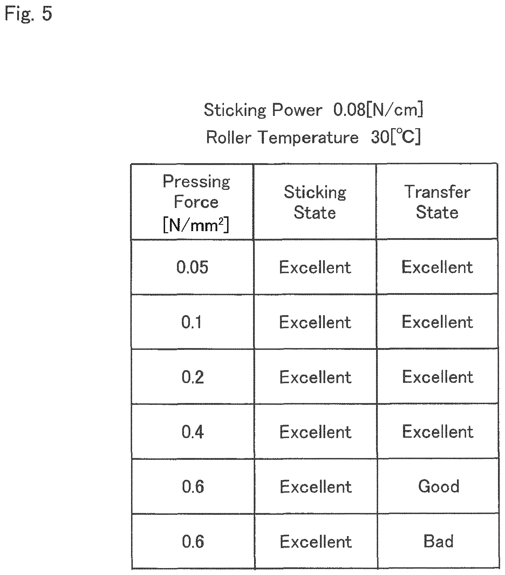

Fig. 5 shows the sticking state and the transfer state for each value of the pressing force during affixation in the affixation part 50 in the case where the sticking power of the surface of the support film 93 is 0.08 N/cm and the surface temperature of the laminating roller 63 is 30°C.

As shown in Fig. 5, the sticking state is excellent and the transfer state is excellent or good when the pressing force during affixation in the affixation part 50 is in the range of 0.05 to 0.6 N/mm². It is hence preferable that the pressing force during affixation is in the range of 0.05 to 0.6 N/mm². In other words, when the pressing force is in the aforementioned range, the support film 93 sticks to the electrolyte membrane 90 to appropriately support the electrolyte membrane 90, and the transfer of the second electrode layer 9b is less liable to occur. In particular, the sticking state is excellent and the transfer state is excellent when the pressing force during affixation in the affixation part 50 is in the range of 0.05 to 0.4 N/mm². It is hence more preferable that the pressing force during affixation is in the range of 0.05 to 0.4 N/mm².

As the surface temperature of the laminating roller 63 increases, the electrolyte membrane 90 and the support film 93 stick to each other more easily, but the transfer of the second electrode layer 9b is more prone to occur. It is hence desirable that the surface temperature of the laminating roller 63 is in an appropriate range.

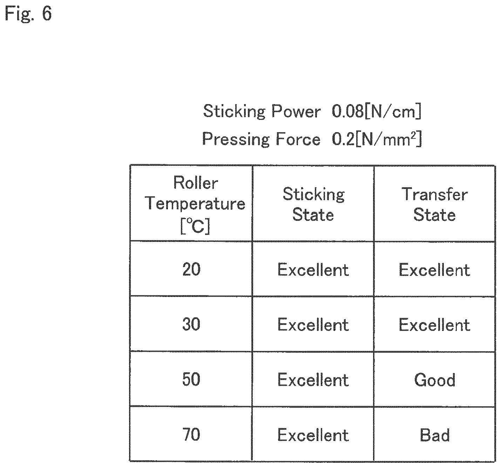

Fig. 6 shows the sticking state and the transfer state for each value of the surface temperature of the laminating roller 63 in the case where the sticking power of the surface of the support film 93 is 0.08 N/cm and the pressing force is 0.2 N/mm² during affixation.

As shown in Fig. 6, the sticking state is excellent and the transfer state is excellent or good when the surface temperature of the laminating roller 63 is in the range of 20 to 50°C. It is hence preferable that the surface temperature of the laminating roller 63 is in the range of 20 to 50°C. In other words, when the surface temperature of the laminating roller 63 is in the aforementioned range, the support film 93 sticks to the electrolyte membrane 90 to appropriately support the electrolyte membrane 90, and the transfer of the second electrode layer 9b is less liable to occur. In particular, the sticking state is excellent and the transfer state is excellent when the surface temperature of the laminating roller 63 is in the range of 20 to 30°C. It is hence more preferable that the surface temperature of the laminating roller 63 is in the range of 20 to 30°C.

### <3. Modifications>

While the one preferred embodiment according to the present invention has been described hereinabove, the present invention is not limited to the aforementioned preferred embodiment.

In the aforementioned preferred embodiment, it has been described that the second electrode layer 9b is formed on the second surface of the electrolyte membrane 90 having the first surface with the first electrode layer 9a previously formed thereon. However, the manufacturing apparatus according to the present invention may be configured to form an electrode layer on an electrolyte membrane having first and second surfaces with no electrode layers formed thereon.

In the aforementioned preferred embodiment, it has been described that the laminated base material 920 comprised of the two layers, i.e. the electrolyte membrane 90 and the back sheet 92, is supplied from the laminated base material supply roller 31 serving as the electrolyte membrane supply roller. However, the electrolyte membrane supply roller according to the present invention may be configured to unwind the electrolyte membrane 90 to which the back sheet 92 is not affixed.

In the aforementioned preferred embodiment, it has been described that the back sheet 92 and the support film 93 are made of different materials. However, the back sheet 92 and the support film 93 may be made of the same material. In that case, the back sheet 92 wound on the back sheet collection roller 35 may be unwound as the support film 93 from the support film supply roller 61.

The configuration of the details of the manufacturing apparatus may differ from that shown in the figures of the present invention. The components described in the aforementioned preferred embodiment and in the modifications may be combined together, as appropriate, without inconsistencies.

While the invention has been described in detail, the foregoing description is in all aspects illustrative and not restrictive. It is understood that numerous other modifications and variations can be devised without departing from the scope of the invention.

## Claims

1. A laminated assembly comprising
a hydrocarbon-based polymer electrolyte membrane;
an electrode layer formed on at least one side surface of said polymer electrolyte membrane; and
a support film affixed to said one side surface having said electrode layer in said polymer electrolyte membrane,
wherein said support film includes one surface in contact with said one side surface of said polymer electrolyte membrane, said one surface having sticking power,
the sticking power of the surface being in the range of 0.02 to 0.08 N/cm in terms of a value measured pursuant to JIS, Japanese Industrial Standards, A 0237.

2. The laminated assembly according to claim 1,
said support film comprising:
a base material layer; and
a sticky layer made of a sticky material and covering a surface of said base material layer.

3. The laminated assembly according to claim 2, wherein
said base material layer includes a polyolefin, polyester, polyvinyl chloride, or polyurethane.

4. The laminated assembly according to claim 3, wherein
said electrode layer includes particles of platinum, a platinum alloy or a platinum compound as catalyst particles.

5. A method of affixing a support film to a hydrocarbon-based polymer electrolyte membrane including at least one surface with an electrode layer for a fuel cell formed thereon, the method comprising
bringing the surface of the electrolyte membrane with the electrode layer formed thereon and said surface of said support film having the sticking power and recited in claim 1 or 2 into contact with each other to affix said support film to said electrolyte membrane,
the sticking power of the surface being in the range of 0.02 to 0.08 N/cm in terms of a value measured pursuant to JIS, Japanese Industrial Standards, A 0237.

6. The method according to claim 5, wherein
said support film is affixed to said electrolyte membrane at a temperature in the range of 20 to 50°C.

7. A method of manufacturing a membrane electrode assembly by forming an electrode layer on a surface of an elongated strip-shaped hydrocarbon-based polymer electrolyte membrane while transporting said electrolyte membrane, the method comprising the steps of:
a) unwinding said elongated strip-shaped electrolyte membrane toward a suction roller rotating while developing a negative pressure on an outer peripheral surface thereof to hold said electrolyte membrane on said outer peripheral surface of said suction roller;
b) applying an electrode material to the surface of said electrolyte membrane held on said outer peripheral surface of said suction roller to form said electrode layer; and
c) separating said electrolyte membrane from said suction roller to affix a support film to said electrolyte membrane,
wherein said support film includes at least one surface having sticking power,
wherein the sticking power of the surface is in the range of 0.02 to 0.08 N/cm in terms of a value measured pursuant to JIS, Japanese Industrial Standards, A 0237, and
wherein said support film is affixed to said electrolyte membrane in said step c) by bringing the surface of said electrolyte membrane with said electrode layer formed thereon and said surface of said support film having the sticking power into contact with each other.

8. A system for manufacturing a membrane electrode assembly by forming an electrode layer on a surface of an elongated strip-shaped hydrocarbon-based polymer electrolyte membrane while transporting said electrolyte membrane, the system comprising:
a support film;
a suction roller rotating while developing a negative pressure on an outer peripheral surface thereof;
an electrolyte membrane supply roller for unwinding said electrolyte membrane toward the outer peripheral surface of said suction roller;
an affixation part for affixing said electrolyte membrane separating from the outer peripheral surface of said suction roller and said support film to each other;
an electrolyte membrane collection roller for winding said electrolyte membrane supported by said support film thereon; and
an electrode formation part for applying an electrode material to the surface of said electrolyte membrane around said suction roller to form said electrode layer,
wherein said support film includes at least one surface having sticking power,
wherein the sticking power of the surface is in the range of 0.02 to 0.08 N/cm in terms of a value measured pursuant to JIS, Japanese Industrial Standards, A 0237, and
wherein said affixation part affixes said electrolyte membrane and said support film to each other by bringing the surface of said electrolyte membrane with said electrode layer formed thereon and said surface of said support film having the sticking power into contact with each other.

## Patentansprüche

1. Laminierte Anordnung, umfassend
eine Polymerelektrolytmembran auf Kohlenwasserstoffbasis;
eine Elektrodenschicht, die auf mindestens einer Seitenfläche der Polymerelektrolytmembran ausgebildet ist, und
eine Trägerfolie, die an der einen Seitenfläche mit der Elektrodenschicht in der Polymerelektrolytmembran befestigt ist,
wobei die Trägerfolie eine Oberfläche enthält, die in Kontakt mit der einen Seitenfläche der Polymerelektrolytmembran steht, wobei die eine Oberfläche Klebekraft aufweist,
die Klebekraft der Oberfläche in der Größenordnung von 0,02 bis 0,08 N/cm in Bezug auf einen gemäß JIS, Japanese Industrial Standards, A0237 gemessenen Wert liegt.

2. Laminierte Anordnung nach Anspruch 1,
wobei die Trägerfolie umfasst:
eine Basismaterialschicht; und
eine klebrige Schicht, die aus einem klebrigen Material hergestellt ist und eine Oberfläche der Basismaterialschicht bedeckt.

3. Laminierte Anordnung nach Anspruch 2, wobei
die Basismaterialschicht ein Polyolefin, Polyester, Polyvinylchlorid oder Polyurethan enthält.

4. Laminierte Anordnung nach Anspruch 3, wobei
die Elektrodenschicht Partikeln aus Platin, einer Platinlegierung oder einer Platinverbindung als Katalysatorpartikeln enthält.

5. Verfahren zur Befestigung einer Trägerfolie an einer Polymerelektrolytmembran auf Kohlenwasserstoffbasis, die mindestens eine Oberfläche mit einer darauf ausgebildeten Elektrodenschicht für eine Brennstoffzelle enthält, wobei das Verfahren umfasst
Bringen der Oberfläche der Elektrolytmembran mit der darauf ausgebildeten Elektrodenschicht und der Oberfläche der Trägerfolie, die die Klebekraft aufweist und in Anspruch 1 oder 2 genannt ist, miteinander in Kontakt, um die Trägerfolie an der Elektrolytmembran zu befestigen,
wobei die Klebekraft der Oberfläche im Bereich von 0,02 bis 0,08 N/cm in Bezug auf einen gemäß JIS, Japanese Industrial Standards, A0237 gemessenen Wert liegt.

6. Verfahren nach Anspruch 5, wobei
die Trägerfolie an der Elektrolytmembran bei einer Temperatur im Bereich von 20 bis 50°C befestigt wird.

7. Verfahren zur Herstellung einer Membranelektrodenanordnung durch Ausbilden einer Elektrodenschicht auf einer Oberfläche einer langgestreckten streifenförmigen Polymerelektrolytmembran auf Kohlenwasserstoffbasis, während die Elektrolytmembran transportiert wird, wobei das Verfahren die folgenden Schritte umfasst:
a) Abwickeln der langgestreckten streifenförmigen Elektrolytmembran in Richtung einer Saugwalze, die sich dreht, während sie einen Unterdruck auf einer äußeren Umfangsfläche entwickelt, um die Elektrolytmembran an der äußeren Umfangsfläche der Saugwalze zu halten;
b) Aufbringen eines Elektrodenmaterials auf die Oberfläche der Elektrolytmembran, die auf der äußeren Umfangsfläche der Saugwalze gehalten wird, zur Bildung der Elektrodenschicht; und
c) Trennen der Elektrolytmembran von der Saugwalze zum Befestigen einer Trägerfolie an der Elektrolytmembran, wobei die Trägerfolie mindestens eine Oberfläche mit Klebekraft aufweist,
wobei die Klebekraft der Oberfläche in der Größenordnung von 0,02 bis 0,08 N/cm in Bezug auf einen gemäß JIS, Japanese Industrial Standards, A0237, gemessenen Wert liegt, und
wobei die Trägerfolie in dem Schritt c) an der Elektrolytmembran befestigt wird, indem die Oberfläche der Elektrolytmembran mit der darauf ausgebildeten Elektrodenschicht und die Oberfläche der Trägerfolie mit der Klebekraft in Kontakt miteinander gebracht werden.

8. System zur Herstellung einer Membranelektrodenanordnung durch Ausbilden einer Elektrodenschicht auf einer Oberfläche einer langgestreckten streifenförmigen Polymerelektrolytmembran auf Kohlenwasserstoffbasis, während die Elektrolytmembran transportiert wird, wobei das System umfasst:
eine Trägerfolie;
eine Saugwalze, die rotiert, während sie einen Unterdruck auf einer äußeren Umfangsfläche davon entwickelt;
eine Elektrolytmembran-Zuführungswalze zum Abwickeln der Elektrolytmembran in Richtung der äußeren Umfangsfläche der Saugwalze;
ein Befestigungsteil zum Befestigen der Elektrolytmembran, die sich von der der äußeren Umfangsfläche der Saugwalze trennt, und der Trägerfolie aneinander;
eine Elektrolytmembran-Sammelwalze zum Aufwickeln der Elektrolytmembran, die von der Trägerfolie getragen wird; und
ein Elektrodenausbildungsteil zum Aufbringen eines Elektrodenmaterials auf die Oberfläche der Elektrolytmembran um die Saugwalze herum zur Ausbildung der Elektrodenschicht,
wobei die Trägerfolie mindestens eine Oberfläche mit Klebekraft aufweist,
wobei die Klebekraft der Oberfläche in der Größenordnung von 0,02 bis 0,08 N/cm in Bezug auf einen gemäß JIS, Japanese Industrial Standards, A0237, gemessenen Wert liegt, und
wobei das Befestigungsteil die Elektrolytmembran und die Trägerfolie aneinander befestigt, indem die Oberfläche der Elektrolytmembran mit der darauf ausgebildeten Elektrodenschicht und die Oberfläche der Trägerfolie mit der Klebekraft miteinander in Kontakt gebracht werden.

## Revendications

1. Ensemble stratifié comprenant
une membrane électrolytique polymère à base d'hydrocarbure ;
une couche d'électrode formée sur au moins une surface latérale de ladite membrane électrolytique polymère ; et
un film de support fixé à ladite surface latérale ayant ladite couche d'électrode dans ladite membrane électrolytique polymère,
dans lequel ledit film de support inclut une surface en contact avec ladite surface latérale de ladite membrane électrolytique polymère, ladite surface ayant un pouvoir d'adhérence,
le pouvoir d'adhérence de la surface étant compris entre 0,02 et 0,08 N/cm en termes de valeur mesurée conformément à JIS, Normes industrielles japonaises, A 0237.

2. Ensemble stratifié selon la revendication 1,
ledit film de support comprenant :
une couche de matériau de base ; et
une couche collante faite d'un matériau collant et couvrant une surface de ladite couche de matériau de base.

3. Ensemble stratifié selon la revendication 2, dans lequel
ladite couche de matériau de base inclut une polyoléfine, un polyester, un chlorure de polyvinyle ou un polyuréthane.

4. Ensemble stratifié selon la revendication 3, dans lequel
ladite couche d'électrode inclut des particules de platine, un alliage de platine ou un composé de platine en tant que particules de catalyseur.

5. Procédé de fixation d'un film de support à une membrane électrolytique polymère à base d'hydrocarbure incluant au moins une surface ayant une couche d'électrode pour une pile à combustible y étant formée, le procédé consistant à
amener la surface de la membrane électrolytique ayant la couche d'électrode y étant formée et ladite surface dudit film de support ayant le pouvoir d'adhérence et selon la revendication 1 ou 2 en contact l'une avec l'autre pour fixer ledit film de support à ladite membrane électrolytique,
le pouvoir d'adhérence de la surface étant compris entre 0,02 et 0,08 N/cm en termes de valeur mesurée conformément à JIS, Normes industrielles japonaises, A 0237.

6. Procédé selon la revendication 5, dans lequel
ledit film de support est fixé à ladite membrane électrolytique à une température comprise entre 20 et 50°C.

7. Procédé de fabrication d'un assemblage membrane-électrode en formant une couche d'électrode sur une surface d'une membrane électrolytique polymère à base d'hydrocarbure en forme de bande allongée tout en transportant ladite membrane électrolytique, le procédé comprenant les étapes consistant à :
a) dérouler ladite membrane électrolytique en forme de bande allongée vers un rouleau d'aspiration en rotation tout en développant une pression négative sur une surface périphérique extérieure de celui-ci pour maintenir ladite membrane électrolytique sur ladite surface périphérique extérieure dudit rouleau d'aspiration ;
b) appliquer un matériau d'électrode à la surface de ladite membrane électrolytique maintenue sur ladite surface périphérique extérieure dudit rouleau d'aspiration pour former ladite couche d'électrode ; et
c) séparer ladite membrane électrolytique dudit rouleau d'aspiration pour fixer un film de support à ladite membrane électrolytique,
dans lequel ledit film de support inclut au moins une surface ayant un pouvoir d'adhérence,
dans lequel le pouvoir d'adhérence de la surface est compris entre 0,02 et 0,08 N/cm en termes de valeur mesurée conformément à JIS, Normes industrielles japonaises, A 0237, et
dans lequel ledit film de support est fixé à ladite membrane électrolytique dans ladite étape c) en amenant la surface de ladite membrane électrolytique ayant ladite couche d'électrode y étant formée et ladite surface dudit film de support ayant le pouvoir d'adhérence en contact l'une avec l'autre.

8. Système de fabrication d'un assemblage membrane-électrode en formant une couche d'électrode sur une surface d'une membrane électrolytique polymère à base d'hydrocarbure en forme de bande allongée tout en transportant ladite membrane électrolytique, le système comprenant :
un film de support ;
un rouleau d'aspiration en rotation tout en développant une pression négative sur une surface périphérique extérieure de celui-ci ;
un rouleau d'alimentation de membrane électrolytique pour dérouler ladite membrane électrolytique vers la surface périphérique extérieure dudit rouleau d'aspiration ;
une partie de fixation pour fixer ladite membrane électrolytique séparant la surface périphérique extérieure dudit rouleau d'aspiration et ledit film de support l'un avec l'autre ;
un rouleau de collecte de membrane électrolytique pour enrouler ladite membrane électrolytique soutenue par ledit film de support sur celui-ci ; et
une partie formation d'électrode pour appliquer un matériau d'électrode à la surface de ladite membrane électrolytique autour dudit rouleau d'aspiration pour former ladite couche d'électrode,
dans lequel ledit film de support inclut au moins une surface ayant un pouvoir d'adhérence,
dans lequel le pouvoir d'adhérence de la surface est compris entre 0,02 et 0,08 N/cm en termes de valeur mesurée conformément à JIS, Normes industrielles japonaises, A 0237, et
dans lequel ladite partie de fixation fixe ladite membrane électrolytique et ledit film de support l'un avec l'autre en amenant la surface de ladite membrane électrolytique ayant ladite couche d'électrode y étant formée et ladite surface dudit film de support ayant le pouvoir d'adhérence en contact l'une avec l'autre.
